# EUROPEAN PATENT APPLICATION

(11) **EP 2 093 979 A1**
(43) Date of publication of application: **26.08.2009**
(21) Application number: 08151627.0
(22) Date of filing: 19.02.2008
(51) Int. Cl.: H04M 1/02, H04M 1/23, H01R 13/447, H01R 13/52

(54) **Multi-function slide mechanism for a mobile communication device**

(71) Applicant: Research In Motion Limited, Waterloo, Ontario N2L 3W8 (CA)
(72) Inventor: Griffin, Jason, Kitchener Ontario N2P 2L3 (CA)
(74) Representative: Rickard, David John

(57) **Abstract**

The application is directed at a mobile communication device including a sliding element having a cover portion and an elongated portion extending from the cover portion. An actuator is located on the sliding element such that when the sliding element is in a first position, access to a predetermined device functionality is restricted to a user and in a second position, the actuator is positioned to enable user access to the predetermined device functionality.

## Description

The present application relates generally to a multi-function slide mechanism for a mobile communication device.

The development of mobile communication devices over the past decade has brought upon the evolution of increased functionality for these devices. Instead of being used solely for voice communication purposes, many current devices include added functionality such as data communication, appointment tracking, memo writing, playing music or taking pictures. These added functionalities are typically integrated within the mobile communication device.

Generally, these added functionalities, along with basic functionalities, can be used at any time with user assistance or intervention. For instance, a user typically has to select an icon or press a button to start a music player or take a picture. However, there are occasions when these added functionalities are accidentally activated. This is especially problematic if the mobile communication device is located within a user's pocket or purse whereby the accidental activation goes unnoticed. This can lead to problems such as the battery of the mobile communication device becoming unknowingly drained. Furthermore, when exposed, the parts performing the added functionality, such as a speaker or a camera lens, can easily get dirty or damaged.

It is, therefore, desirable to provide a novel mobile communication device having a multi-function sliding element.

### GENERAL

In a first aspect, the present application may provide a mobile communication device comprising: a sliding element including an actuator; wherein when the sliding element is in a first position, access to predetermined device functionality is restricted to a user and in a second position, the actuator is positioned to enable user access to the predetermined device functionality.

Other aspects and features of the present application will become apparent to those ordinarily skilled in the art upon review of the following description of specific embodiments in conjunction with the accompanying figures.

### BRIEF DESCRIPTION OF THE DRAWINGS

Embodiments of the present application will now be described, by way of example only, with reference to the attached Figures, wherein:
Figure 1 is a rear perspective view of a mobile communication device having a sliding portion in a first position;
Figure 2a is a rear perspective view of the mobile communication device having a sliding portion in a second position;
Figure 2b is a rear perspective view of a second embodiment of the mobile communication device having a sliding portion in a second position;
Figure 2c is a rear perspective view of a third embodiment of the mobile communication device having a sliding portion in a second position;
Figure 3 is a rear perspective view of the sliding portion separated from the mobile communication device with a cover plate removed;
Figures 4a to 4c are cut away side views of the mobile communication device
   with the sliding portion in the first and second position;
Figure 5 is a cut away rear view of another embodiment of a mobile communication device with the sliding portion in the first position; and
Figure 6 is a cut away rear view of the embodiment of Figure 5 with the sliding portion in the second position; and
Figures 7a to 7c are cut away side views of a further embodiment of a mobile communication device with a sliding portion in the first and second position.

### DESCRIPTION OF PREFERRED EMBODIMENTS

Generally, the present application provides a method, system and apparatus for a multi-function slide mechanism for a mobile communication device. The sliding element, or portion, can be in a first, or locked, position whereby access to a predetermined device functionality is restricted or a second, or unlocked, position whereby access to the predetermined device functionality is available for use. Furthermore, in another aspect of the application, when the sliding element is in the first position, the device can be in a stand-by mode and when the sliding element is in the second position, the device is in an operational mode.

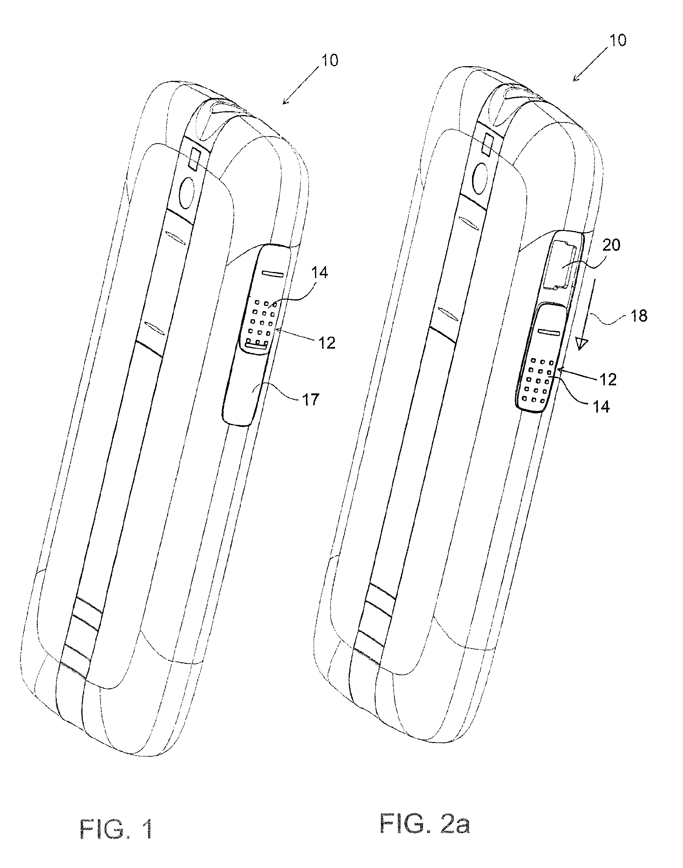

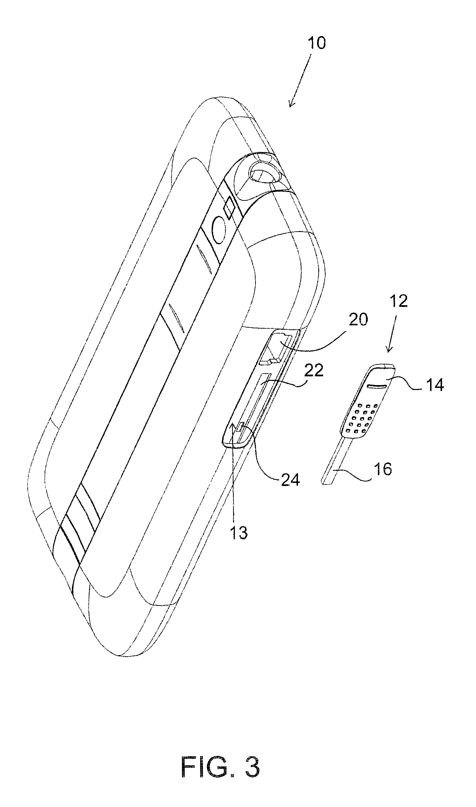

Turning to Figure 1, a rear perspective view of a mobile electronic device, such as a mobile communication device, having a multi-function sliding element in a first position is shown. As will be understood by one skilled in the art, the mobile communication device 10 includes other parts which are not described or shown but which will be well known and understood. The mobile communication device 10 includes a sliding element, or portion, 12, which is typically located within a cut-out portion 13 (Figure 3) on one side of the mobile communication device 10. The sliding element 12 includes a cover portion 14 and an elongated portion 16, extending from the cover portion 14 (shown in Figure 3).

A friction mechanism, or lock (not shown), is preferably used to keep the sliding element 12 in the first position. A plate 17 located within the cut-out portion 13 serves to protect foreign particles from entering the mobile communication device 10.

Turning to Figure 2a, a rear perspective of the mobile communication device with the sliding element in the second position is shown. In order to move the sliding element 12 from the first to the second position, the sliding element 12 is urged in a downward direction (as shown by arrow 18). As will be understood, depending on the design of the mobile communication device 10, the sliding element 12 can also be urged in an upward direction to move the sliding element 12 from the second position to the first position.

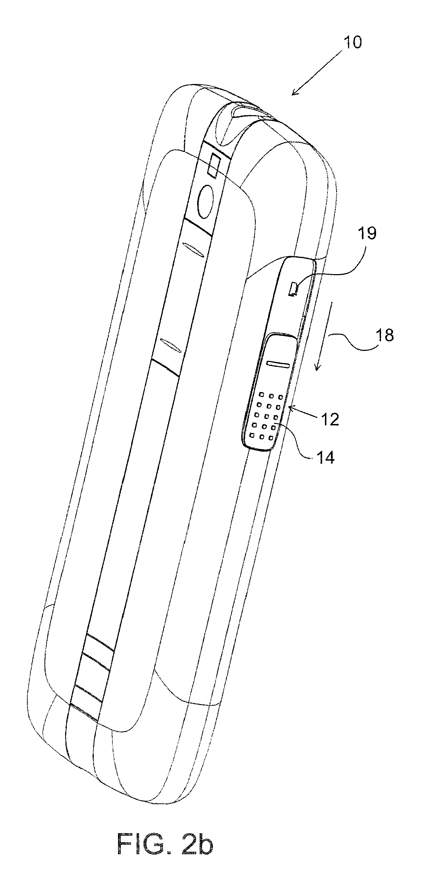

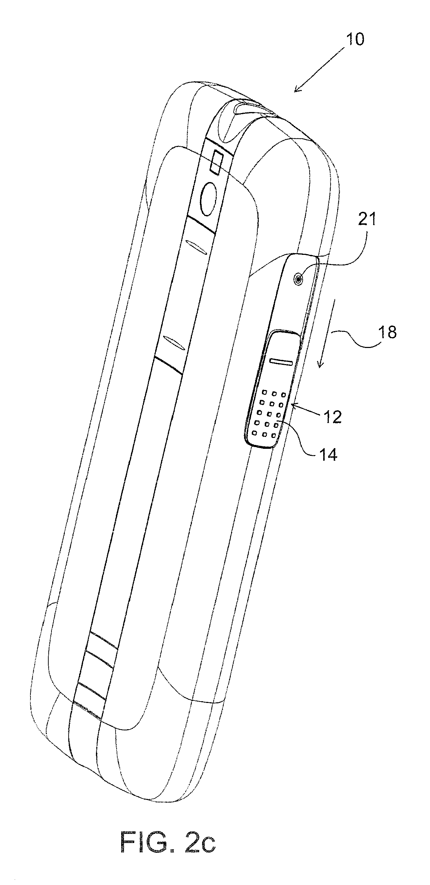

The mobile communication device 10 further includes a port 20, such as an USB port, which is accessible, or available, when the sliding element 12 is in the second position. When the sliding portion 12 is in the first position, the cover portion 14 of the sliding portion 12 is used to cover, and protect, the port. In addition to a USB port, the cover portion can also be used to cover a power charging contact 19 (Figure 2b), an audio jack 21 (Figure 2c), a camera, etc.

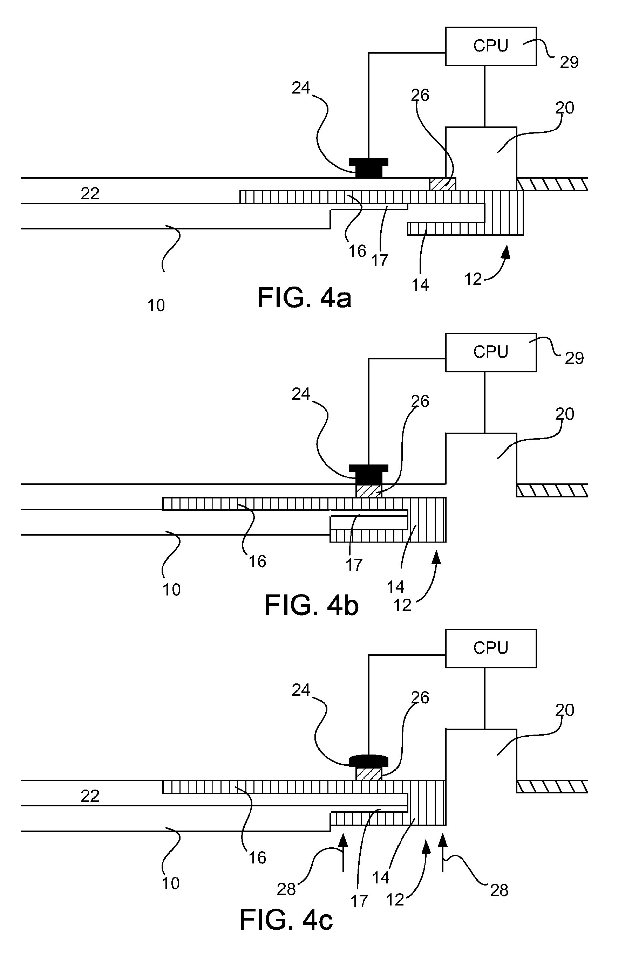

Figure 3 provides a rear perspective view of the mobile electronic device 10 whereby the sliding element 12 is separated from the device 10. In this figure, the cover plate 17 (not shown) is removed so that further details of the mobile communication device 10 can be revealed. As indicated, the sliding portion 12 includes the cover portion 14 and the elongated portion 16. The elongated portion 16 mates with a corresponding groove, or slot, 22 and slides within the groove 22 between the first and second positions. The length of the groove 22 is created such that when the elongated portion 16 is at one end of the groove 22, it is in one of the first or second positions and when the elongated portion 16 is at the other end of the groove 22, it is in the other position. Within the groove 22 is an actuator button 24 which can be activated by an actuator 26 (Figures 4a to 4c) located on a rear of the sliding element 12 to enable the predetermined device functionality, which has been associated or programmed to the actuator button 24, when the sliding element 12 is in the second position. This will be described below with respect to Figures 4a to 4c.

Schematic views of the sliding element in the first and second positions are shown in Figures 4a and 4b respectively. Figure 4c shows the sliding element being urged inward to activate the actuator button 24, when in the second position. As shown in Figures 4a to 4c, both the actuator button 24 and the port 20 are connected to a mobile communication device processor 29. Typical operation of the processor 29 will be well understood by one skilled in the art.

In Figure 4a, when the sliding element 12 is in the first position, the sliding element 12 protects the port 20 from foreign particles and also restricts user access to the port 20. As can be seen, the actuator 26 is located away from the actuator button 24 such that an inward urging of the sliding element 12 does not result in the actuator button 24 being activated. In the current embodiment, a portion of the actuator 26 abuts the mobile communication device adjacent to port 20 to provide an impedance to the sliding element 12 from being urged inward. Furthermore, the frame of the mobile communication device 10 can be designed so that the cover portion 14 of the sliding element 12 also abuts the frame to provide further resistance against inward movement. Therefore, if the sliding element is accidentally urged inward, there is no activation of the predetermined functionality.

A further safeguard is that since the surface of the actuator button 24 is flush with the bottom of the groove 22, there is no contact between the elongated portion 16 and the actuator button 24 even if the sliding element 12 is somehow inwardly urged. This reduces the problem of having the actuator button 24 being accidentally activated when the device 10 is located in a user's purse or pocket. As will be understood, it is more difficult for the activator button 24 to be accidentally activated, such that in the first position access to certain functionalities of the device is restricted.

In the second position, as shown in Figure 4b, the actuator 26 is positioned adjacent, and abuts, the actuator button 24. A space is defined between the cover portion 14 and the plate 17 so that the sliding element 12 can be urged toward the actuator button 24. Also, when the sliding element 12 is moved from the first position to the second position, the port 20 is available to the user who can then plug in a corresponding USB cable. If a cable is plugged into the port 20, a signal is transmitted to the processor 29 indicating the presence of the plug. As will be understood, the user can then interact with the device 10 via the port 20.

As schematically shown in Figure 4c, an inward urging (in the direction of arrow 28) of the sliding element 12 causes the actuator button 24 to be activated by the actuator 26. When the actuator button 24 is pressed, a signal is transmitted from the button 24 to the processor 29. The processor 29 receives the signal and then performs the functionality associated with the button.

The functionality of the actuator button 24 can be programmed when the mobile communication device 10 is manufactured or can be programmed by the owner, or a user, of the mobile communication device 10. Examples include, but are not limited to, a camera shutter button, a music player button or a phone activation button. In this manner, only when the sliding element 12 is in the second position will a user be able to access this predetermined device, or added functionality.

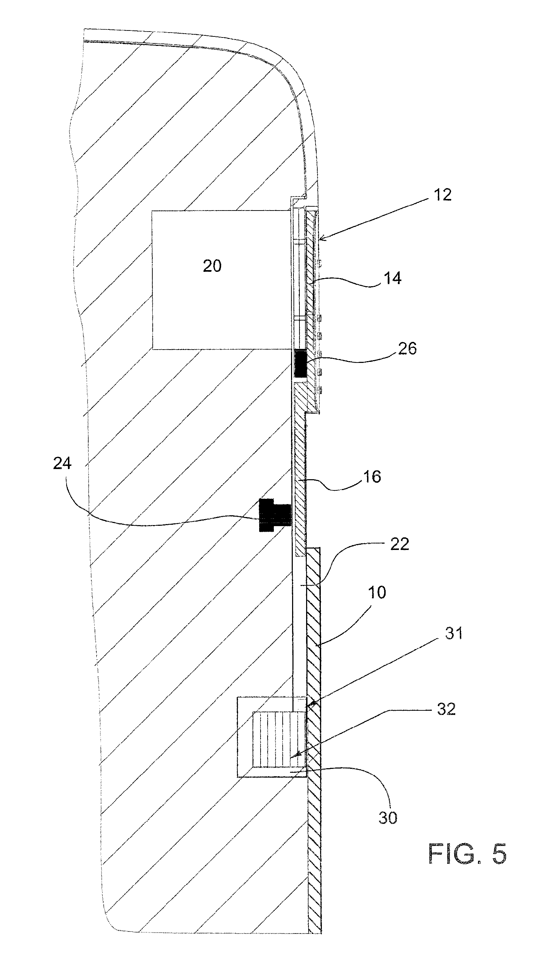

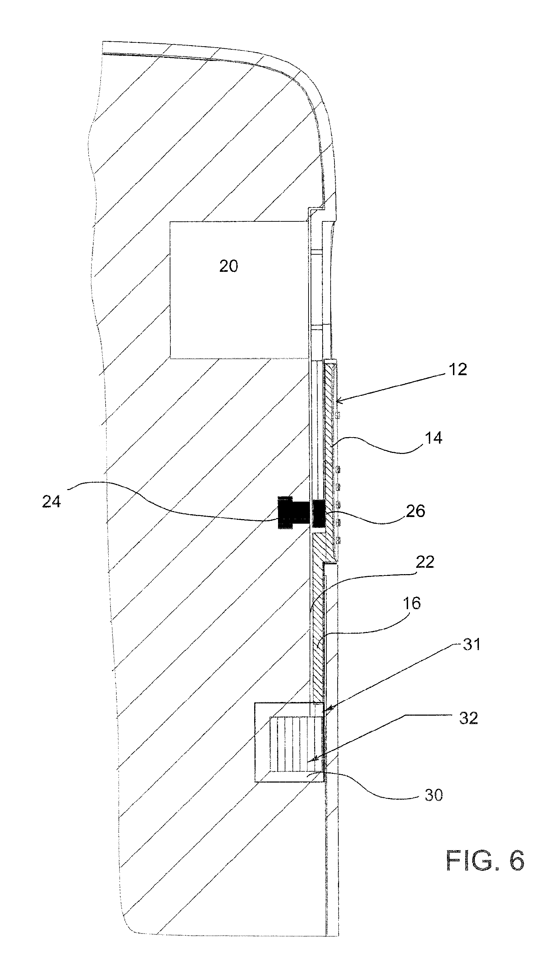

Figures 5 and 6 are schematic views of a further embodiment of a mobile communication device. The device in Figures 5 and 6 is identical to the device disclosed above, with the addition of a sensor apparatus for sensing the position of the sliding element. In this embodiment, when the sliding element 12 is in the first position, the mobile communication device is in a stand-by mode and when the sliding element is in the second position, the mobile communication device is in an operational mode.

The mobile communication device 10 of Figures 5 and 6 includes a sensor apparatus 30, comprising a sensor 31 and a communication apparatus 32, which is located at one end of the groove 22. When the sliding element 12 is in the second position (Figure 6), the presence of the elongated portion 16 is sensed by the sensor 31. Alternatively, the sensor 31 can be a physical switch which is turned on when contact is made between the elongated portion 16 and the switch. When the sensor 31 determines that the sliding element 12 is in the second position, a signal is transmitted by the communication apparatus 32 to the processor 29 to indicate the position. In the current embodiment, the signal includes the instruction for the processor to "wake up" and move from the stand-by mode to the operational mode. In another embodiment, unless the processor receives the signal from the communication apparatus 32, the processor 29 does not process any signals from either the actuator button 24 or the port 20. This can be extended to overall use of the device if the device is in the stand-by mode. This is preferably achieved via a software lock on the device thereby providing further protection against various device functionality from being accidentally activated, or used.

Alternatively, the signal can represent that that the mobile communication device 10 has been placed back into a holster so that the device enters a stand-by mode. Also, when an email comes in the device is unlocked (exits stand-by mode) within a short time of the email notification, the software can send a signal to the processor to automatically open up and present the latest email. Also, if the device is locked after a predetermined time in an open message, the message can be marked as read and the user interface returned to the main screen.

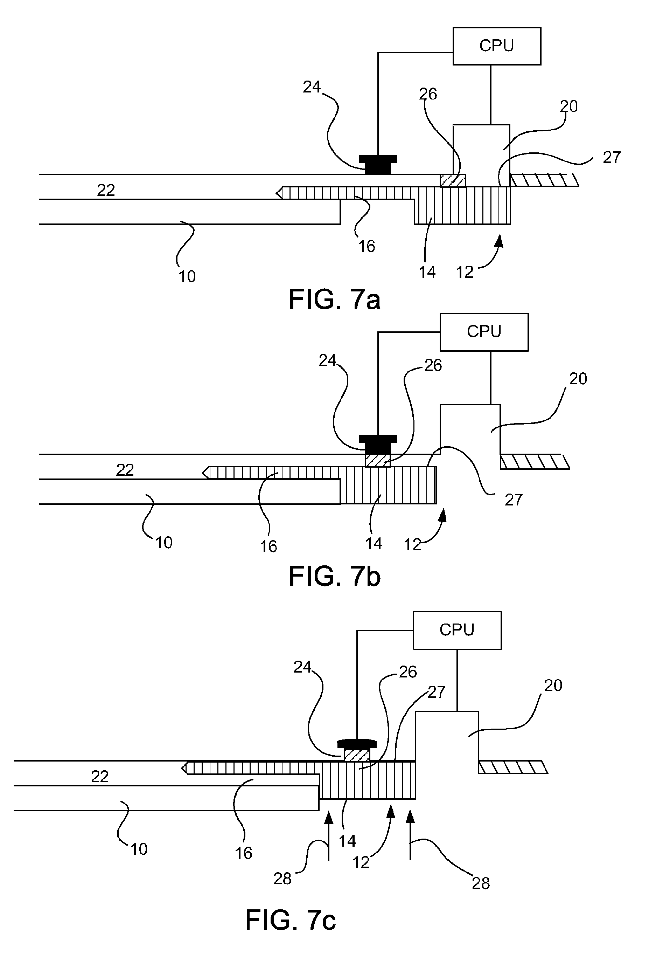

Turning to Figure 7a to 7c, schematic diagrams of a second embodiment of a sliding element is shown in the first and second positions. In this embodiment, the plate has been removed and the actuator 26 is located on a rear face 27 of the sliding element 12. Operation of the device is identical to the embodiment of Figures 4a to 4c. In this embodiment, the elongated portion 16 serves to protect the device from foreign particulates.

In another embodiment, there is provided a locking element that can be found not only on the side of the device, but on a front or back as well, and can be used for flip and clam-shell phones as well.

In a further embodiment, the sliding element 12 is manufactured from a graspable material, e.g. plastic or rubber. In another embodiment, the sliding element 12 is textured for easy grip.

In a further embodiment, the sliding element 12 can be spring loaded so it can return to the closed position or hold its place when it is open.

In a further embodiment, the sliding element can be a haptic or capacitive touchpad that works when in contact with the user's skin.

While the embodiments described herein are directed to particular implementations of the portable electronic device, it will be understood that modifications and variations to these embodiments are within the scope and sphere of the present application. For example, the size and shape of many of the features of the portable electronic device can differ while still providing the same function. Many other modifications and variations may occur to those skilled in the art. All such modifications and variations are believed to be within the sphere and scope of the present application.

## Claims

1. A mobile communication device (10) comprising:
a sliding element (12) including an actuator (26);
wherein when the sliding element is in a first position, access to a predetermined device functionality is restricted to a user and in a second position, the actuator is positioned to enable user access to the predetermined device functionality.

2. The mobile communication device (10) of Claim 1 wherein when the sliding element (12) is in the second position, the actuator (26) is aligned with an actuator button (24) within the mobile communication device.

3. The mobile communication device (10) of Claim 2 wherein the sliding element (12) is urged towards the actuator button (24) to activate the predetermined device functionality.

4. The mobile communication device (10) of Claim 1, 2 or 3 further comprising a sensor (31) for determining when the sliding element (12) is in the second position.

5. The mobile communication device (10) of Claim 4 further comprising a communication apparatus (32) for transmitting a signal to a mobile communication device processor (29) when the sliding element (12) is sensed in the second position.

6. The mobile communication device (10) of Claim 5 wherein the signal is a wake up processor signal.

7. The mobile communication device (10) of any preceding claim wherein when the sliding element (12) is in the first position, the sliding element can not be urged inward.

8. The mobile communication device (10) of any preceding claim wherein the sliding element (12) further comprises:
a cover portion (14); and
an elongated portion (16);
wherein the actuator (26) is located on the elongated portion.

9. The mobile communication device (10) of Claim 8 wherein the cover portion (14) covers a USB port when the sliding element (12) is in the first position.

10. The mobile communication device (10) of Claim 8 or 9 wherein the actuator (26) is located on the cover portion (14).

11. The mobile communication device (10) of Claim 8, 9 or 10 wherein the cover portion covers a power charging contact (19) when the sliding element (12) is in the first position.

12. The mobile communication device (10) of any of claims 8 to 11 wherein the cover portion (14) covers an audio jack (21) when the sliding element (12) is in the first position.

## Amended claims

### Amended claims in accordance with Rule 137(2) EPC.

**1.** A mobile communication device (10) comprising:
a sliding element (12) comprising an actuator (26);
wherein when the sliding element is in a first position, access to a means (24) for activating a predetermined device functionality is restricted to a user and in a second position, the actuator is positioned to actuate said means (24) for activating the predetermined device functionality.

**2.** The mobile communication device (10) of Claim 1 wherein when the sliding element (12) is in the second position, the actuator (26) is aligned with an actuator button (24) within the mobile communication device, said actuator button comprising said means for activating the predetermined device functionality.

**3.** The mobile communication device (10) of Claim 2 wherein the sliding element (12) is urged towards the actuator button (24) to actuate said actuator button (24) thereby activating the predetermined device functionality.

**4.** The mobile communication device (10) of Claim 1, 2 or 3 further comprising a sensor (31) for determining when the sliding element (12) is in the second position.

**5.** The mobile communication device (10) of Claim 4 further comprising a communication apparatus (32) for transmitting a signal to a mobile communication device processor (29) when the sliding element (12) is sensed in the second position.

**6.** The mobile communication device (10) of Claim 5 wherein the signal is a wake up processor signal.

**7.** The mobile communication device (10) of any preceding claim wherein when the sliding element (12) is in the first position, the sliding element can not be urged inwardly towards a housing of the mobile communication device (10).

**8.** The mobile communication device (10) of any preceding claim wherein the sliding element (12) further comprises:
a cover portion (14); and
an elongated portion (16);
wherein the actuator (26) is located on the elongated portion.

**9.** The mobile communication device (10) of Claim 8 wherein the cover portion (14) covers a Universal Serial Bus 'USB' port when the sliding element (12) is in the first position.

**10.** The mobile communication device (10) of Claim 8 or 9 wherein the actuator (26) is located on the cover portion (14).

**11.** The mobile communication device (10) of Claim 8, 9 or 10 wherein the cover portion covers a power charging contact (19) when the sliding element (12) is in the first position.

**12.** The mobile communication device (10) of any of claims 8 to 11 wherein the cover portion (14) covers an audio jack (21) when the sliding element (12) is in the first position.
